# FASCICULE DE BREVET EUROPEEN

(11) **EP 0 671 628 B1**
(45) Date de publication et mention de la délivrance du brevet: **23.12.1998**
(21) Numéro de dépôt: 95400331.5
(22) Date de dépôt: 16.02.1995
(51) Int. Cl.: G01P 1/00, G01P 3/44

(54) **Dispositif de détection de la vitesse de rotation d'un palier de roulement**
Vorrichtung zum Messen der Rotationsgeschwindigkeit eines Wälzlagers
Rotation speed measuring device for rollbearing

(30) Priorité: 08.03.1994 FR 9402626
(43) Date de publication de la demande: 13.09.1995
(73) Titulaire: SNR ROULEMENTS, F-74010 Annecy Cédex (FR)
(72) Inventeur: Alff, Denis, F-74000 Annecy (FR)
(74) Mandataire: Ernst-Schonberg, Michel

(56) Documents cités:
- EP-A- 0 092 605
- DE-A- 3 041 334
- FR-A- 2 669 736
- FR-A- 2 693 272

## Description

L'invention concerne un dispositif de détection de la vitesse de rotation d'un palier de roulement qui possède un élément codeur solidaire de la partie tournante du palier et un bloc-capteur constitué par un porte-capteur fixé à un support de positionnement du bloc-capteur monté au contact de la partie non tournante du palier conforme au préambule de la revendication indépendante.

La publication FR-A-2667947 décrit un dispositif dans lequel un porte-capteur annulaire est bloqué entre la bague fixe d'un roulement et un épaulement du support de positionnement. Les déplacements angulaires du porte-capteur, consécutifs aux mouvements axiaux parasites du roulement dans son logement induisent des informations erronées et une dégradation prématurée des connexions électriques.

La publication FR-A-2693272 décrit un dispositif dans lequel le support métallique du bloc-capteur possède une portée de centrage sensiblement axiale au contact d'une portée aménagée sur la partie non tournante du palier. Dans le but d'augmenter la précision de montage du bloc-capteur, il est connu de bloquer le support métallique du bloc capteur entre une face radiale de la partie non tournante du palier et une face radiale adjacente. Le remplacement du porte-capteur nécessite le démontage préalable du roulement.

Il en résulte que le montage correct du bloc-capteur nécessite le respect d'un grand nombre de tolérances de fabrication qui doivent être d'autant plus précises que l'élément codeur est de taille réduite et que son champ magnétique est faible. La configuration annulaire entraîne lors de son démontage éventuel la dépose complète de l'ensemble tournant.

Ce problème est résolu conformément à la caractéristique de la revendication indépendante.

D'autres caractéristiques et avantages de l'invention apparaîtront à la lecture de la description d'exemples de réalisation du dispositif en référence au dessin annexé dans lequel :
- la figure 1 est une vue en coupe axiale du palier de roulement équipé d'un support de bloc-capteur appliqué à une roue motrice de véhicule automobile.
- la figure 2 est une vue en coupe axiale d'une variante de réalisation du palier équipé d'un support de bloc-capteur appliqué à une roue non motrice de véhicule automobile.
- les figures 3, 4, 5 sont des représentations perspective de variantes de réalisation du bloc-capteur.
- les figures 6,7 sont des représentations partielles du palier représenté aux figures 1 et 2 équipé d'un bloc-capteur conforme à la figure 3.

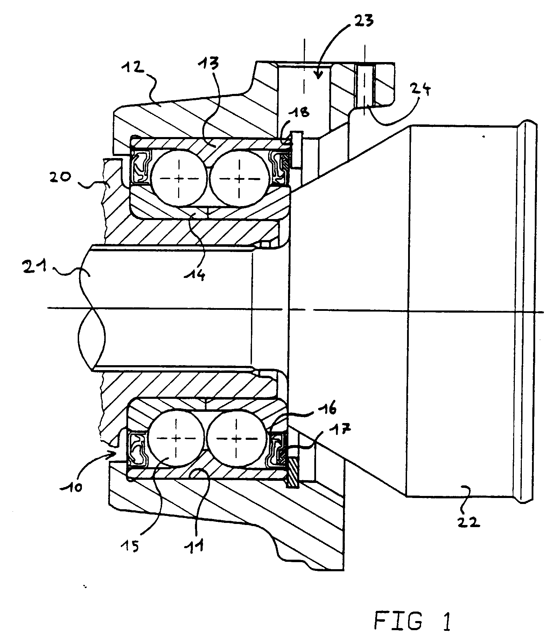

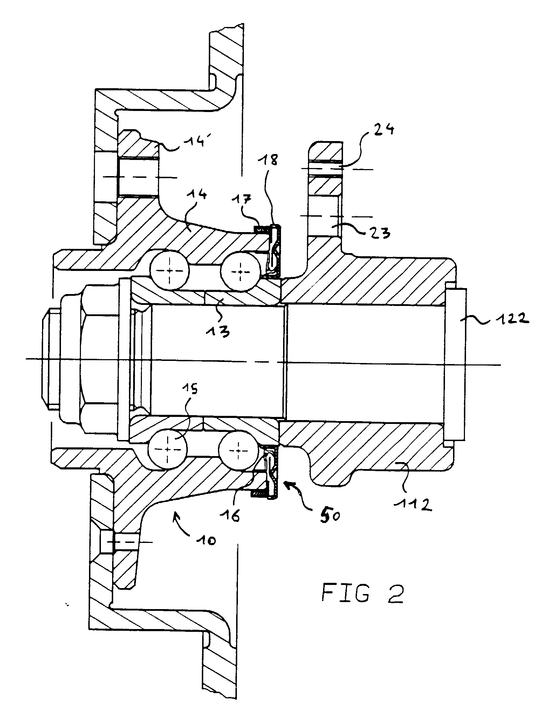

Par souci de simplification de la description on conviendra de désigner par les mêmes références les organes des paliers à roulement respectivement représentés aux figures 1 et 2 qui remplissent la même fonction.

Le palier représenté à la figure 1 est constitué par un roulement 10 fretté dans l'alésage 11 d'un porte-fusée 12 fixe qui constitue ainsi que nous le verrons ci-après le support de positionnement d'un bloc-capteur 30.

Le roulement 10 possède de manière conventionnelle une bague fixe extérieure 13, une bague tournante intérieure 14 en deux parties, des corps roulants 15 disposés entre lesdites bagues et une garniture d'étanchéité 16. La garniture d'étanchéité 16 telle que décrite dans la demande de brevet FR-A-9300458 déposée au nom de la demanderesse possède un élément codeur 17 incorporé, monté sur la bague tournante 14 et peut être positionnée avec précision par rapport à la face latérale de la bague fixe 13.

La bague intérieure 14 est immobilisée sur un moyeu tournant 20 sur lequel est monté le disque de freinage de la roue. Le moyeu 20 porte par ailleurs des cannelures internes d'entraînement montées sur l'arbre 21 de l'élément mené 22 d'un joint de transmission.

Le porte-fusée 12 possède un logement du bloc-capteur réalisé par un perçage radial 23 de montage du bloc-capteur 30 et un trou taraudé 24 de réception d'une vis d'immobilisation 34 dudit bloc-capteur 30.

Le palier représenté à la figure 2 est également constitué par un roulement 10 immobilisé axialement sur un axe fixe 122.

Le roulement 10 possède de manière conventionnelle une bague fixe intérieure 13 en deux parties immobilisée axialement par un écrou de serrage contre la face latérale d'un support fixe 112 du bloc-capteur 30.

A cet effet, le support 112 possède également un logement constitué par un perçage radial de montage 23 du bloc-capteur 30 et un trou taraudé 24 de réception d'une vis d'immobilisation 34 du bloc-capteur.

La bague tournante extérieure 14 est solidaire par sa bride de fixation 14' d'un disque de freinage d'une roue non motrice et porte une garniture d'étanchéité 16 au contact de la bague 13. Un élément codeur 17 est associé à une armature emmanchée sur l'extrémité axiale cylindrique de la bague 14.

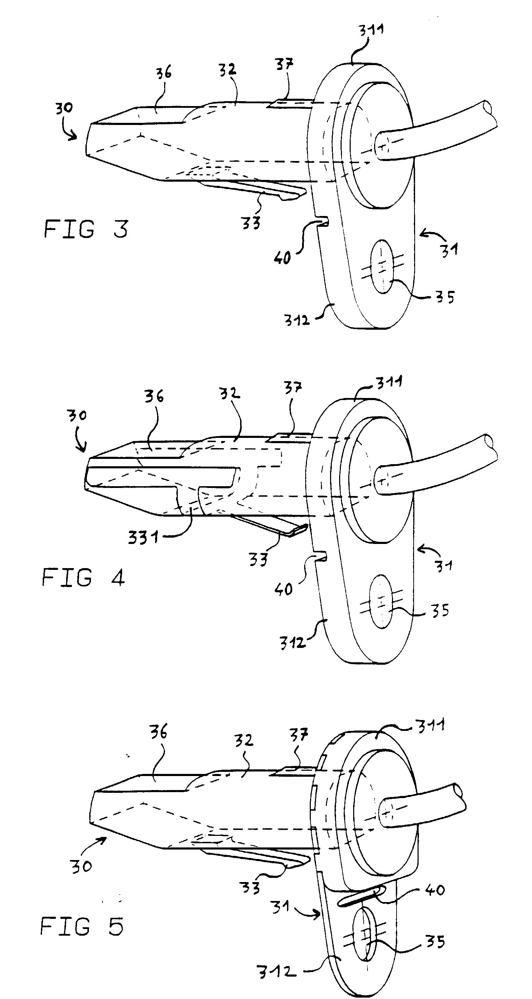

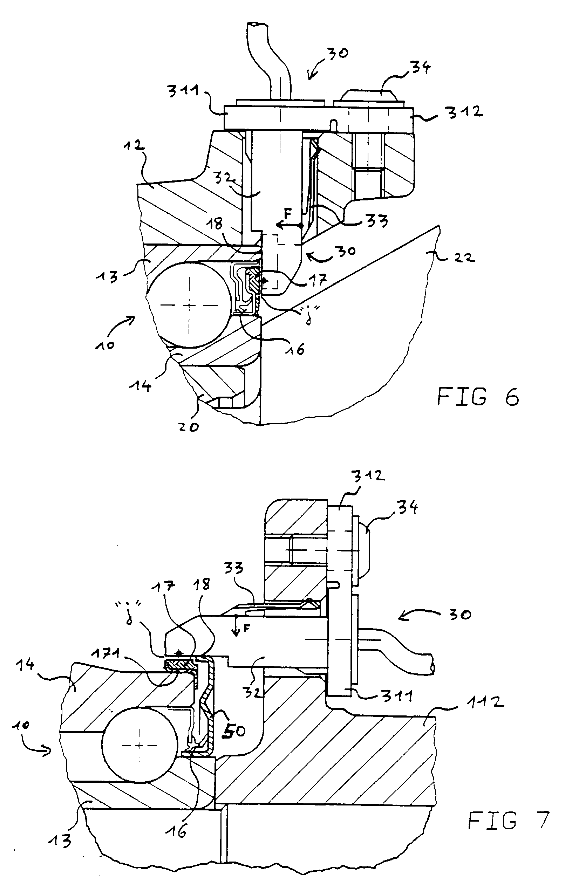

Ainsi que cela est représenté à la figure 3, le bloc-capteur 30 possède une bride d'ajustement et de fixation 31 et un corps 32. Cette disposition constructive est complétée par l'agencement oblong d'un perçage 35 de la bride 31 destiné à la réception de la vis 34. Le corps 32 possède une section réduite par rapport à celle de l'orifice de montage 23 dans le but de créer un jeu de réglage et d'ajustement axial (figure 6) ou radial (figure 7) de la bride par rapport à l'élément codeur 17.

A cet effet le corps 32 porte une languette élastique d'appui 33 au contact de la paroi de l'orifice de montage 23 dans le but de repousser le corps 32 à proximité de l'élément codeur 17.

Une face de détection 36 opposée à la languette 33 facilite le positionnement correct du bloc-capteur dans le sens du réglage souhaité.

Lorsque le corps 32 est positionné dans le perçage de montage 23 comme indiqué à la figure 6, la languette d'appui 33 est mise en compression contre la paroi du perçage et transmet au corps 32 une force de réaction orientée perpendiculairement à la face de détection 36. Le corps 32 se positionne alors au niveau de la face de détection 36 au contact de la face latérale de la bague fixe 13. L'appui de butée 18 au contact de ladite face latérale permet également l'établissement du jeu de fonctionnement "J" entre l'élément codeur 17 et la face de détection 36.

Selon une autre caractéristique du dispositif, le jeu de fonctionnement "J" est également conservé à la suite d'un déplacement axial accidentel du roulement 10 dans son logement. La languette 33 transmet dans ce cas une force F orientée perpendiculairement à la face 36 du corps 32 qui assure le contact permanent entre la face 36 et l'appui de butée 18. Un tel déplacement génère une flexion partielle de la bride 31. La bride 31 est de ce fait fractionnée et possède une tête 311 du bloc-capteur 30 et une patte de fixation et d'appui 312 au contact du support correspondant 12 (figure 6) ou 112 (figure 7) portant le perçage 35. La tête 311 et la patte de fixation 312 sont séparées par une zone de flexion matérialisée à la figure 3 ou 4 par exemple par une rainure 40 qui autorise un déplacement relatif de la tête 311 par rapport à la patte de fixation 312 en diminuant la rigidité de la bride 31.

Selon la figure 3 le bloc-capteur 30 est un élément moulé qui intègre les fonctions d'ajustement et de fixation réalisées par la languette 33 et la bride 31.

Selon la figure 4, le bloc-capteur 30 porte une languette d'appui élastique 33 rapportée sur un collier 331 qui enserre le corps 32 du bloc-capteur.

Selon la figure 5, le bloc-capteur 30 porte une bride de fixation 31 rapportée réalisée dans une tôle d'acier flexible en partie solidarisée avec l'élément plastique constitutif du bloc-capteur.

Dans l'exemple de montage représenté à la figure 7 les déplacements du bloc-capteur 30 pourraient être limités dans le perçage 23 du support 112 par une butée additionnelle 37 portée par le corps 32 qui limite les déplacements du corps 32 dans le perçage 23 sous l'action de l'effort communiqué par la languette 33. Un déflecteur 50 au contact de la garniture d'étanchéité 16 est monté sur la bague fixe intérieure 13. Le déflecteur 50 s'étend radialement vers le corps 32 et constitue l'appui radial de butée 18 dudit corps 32 nécessaire à la conservation du jeu de fonctionnement "j".

On voit par ailleurs que la face de détection 36 du bloc-capteur 30 est orientée vers l'élément codeur 17 porté par un support annulaire 171 monté extérieurement à l'extrémité de la bague extérieure 14, opposée à sa bride de fixation 14'.

## Revendications

1. Dispositif de détection de la vitesse de rotation d'un palier de roulement qui possède un élément codeur (17) solidaire de la partie tournante (14) du palier et un bloc-capteur (30) constitué par un porte capteur (31) fixé à un support (12, 112) monté au contact de la partie non tournante (13) du palier, caractérisé par le fait que le bloc-capteur (30) est monté sur un appui élastique (33) de positionnement, exerçant une force F en direction de l'élément codeur (17) et au contact d'un appui de butée (18) et que des moyens d'ajustement (31, 35) portés par le bloc-capteur (30) assurent le positionnement de ce dernier par rapport à un organe d'immobilisation amovible (34) dudit bloc-capteur (30) au contact du support (12, 112).

2. Dispositif selon la revendication 1, caractérisé par le fait que la force d'appui élastique (F) exercée sur le bloc-capteur (30) est orientée perpendiculairement à une face de détection (36) dudit bloc-capteur (30).

3. Dispositif selon la revendication 2, caractérisé par le fait que l'appui de butée (18) est constitué par une face latérale de la bague fixe (13) du roulement.

4. Dispositif selon la revendication 2, caractérisé par le fait que l'appui de butée (18) est constitué par une extension radiale d'un déflecteur (50) au contact d'une garniture d'étanchéité (16) et lié à la bague fixe (13).

5. Dispositif selon la revendication 2, caractérisé par le fait que le bloc-capteur (30) est sensiblement cylindrique et possède une languette élastique (33) d'appui diamétralement opposée à la face de détection (36) du bloc-capteur et intégrée à ce dernier.

6. Dispositif selon la revendication 5, caractérisé par le fait que ladite languette élastique (33) est solidaire d'un collier (331) monté sur le corps (32) du bloc-capteur (30) puis rapportée et solidarisée mécaniquement à celui-ci.

7. Dispositif selon la revendication 1, caractérisé par le fait que l'organe d'immobilisation (34) du bloc-capteur est porté par une bride (31) de fixation.

8. Dispositif selon la revendication 7, caractérisé par le fait que la bride de fixation (31) est rapportée et solidarisée avec le bloc-capteur (30).

9. Dispositif selon la revendication 7, caractérisé par le fait que la bride de fixation du bloc-capteur est séparée de la tête (311) dudit bloc par une zone de flexion (40) autorisant un déplacement relatif de ladite tête (311) par rapport à une patte de fixation et d'appui (312) portant un perçage (35) de l'organe de fixation (34).

10. Dispositif selon l'une quelconque des revendications 1, 5, 6, 7, 8, 9, caractérisé par le fait que le bloc-capteur (30) porte une butée (37) additionnelle de limitation de déplacement du bloc-capteur (30) dans le logement (23) porté par son support (112).

11. Dispositif selon l'une quelconques des revendications 1, 5, 6, 7, 8, 9, 10, caractérisé par le fait que la face de détection (36) du bloc-capteur est orientée vers l'élément codeur (17) porté par un support annulaire monté extérieurement à l'extrémité de la bague extérieure du roulement opposée à la bride de fixation de ladite bague.

## Patentansprüche

1. Vorrichtung zur Ermittlung der Drehgeschwindigkeit eines Wälzlagers mit einem Kodierelement (17), das fest mit dem drehbaren Teil (14) des Lagers verbunden ist, und einem Sensorblock (30), der durch einen Sensorträger (31) gebildet wird, der an einer Auflage (12, 112) befestigt ist, die in Kontakt mit dem nicht drehbaren Teil (13) des Lagers montiert ist,
dadurch gekennzeichnet, daß der Sensorblock (30) auf einer elastischen Druckfeder (33) zur Positionierung, die in Richtung des Kodierelements (17) eine Kraft F ausübt, und in Kontakt mit einer Anschlag-Auflage (18) montiert ist, und daß Einstellmittel (31, 35), die der Sensorblock (30) trägt, die Positionierung des letzteren in Bezug auf ein abnehmbares Feststellorgan (34) des genannten Sensorblocks (30) gewährleisten, der sich in Kontakt mit der Auflage (12, 112) befindet.

2. Vorrichtung nach Anspruch 1, dadurch gekennzeichnet, daß die elastische Druckkraft (F), die auf den Sensorblock (30) ausgeübt wird, senkrecht zu einer Ermittlungsfläche (36) des genannten Sensorblocks (30) gerichtet ist.

3. Vorrichtung nach Anspruch 2, dadurch gekennzeichnet, daß die Anschlag-Auflage (18) durch eine Seitenfläche des fixen Rings (13) des Wälzlagers gebildet wird.

4. Vorrichtung nach Anspruch 2, dadurch gekennzeichnet, daß die Anschlag-Auflage (18) durch eine radiale Verlängerung eines Deflektors (50) gebildet wird, der sich in Kontakt mit einer Dichtung (16) befindet und mit dem fixen Ring (13) verbunden ist.

5. Vorrichtung nach Anspruch 2, dadurch gekennzeichnet, daß der Sensorblock (30) annähernd zylindrisch ist und eine elastische Druckfeder (33) besitzt, die der Ermittlungsfläche (36) des Sensorblocks diametral entgegengesetzt ist und in letzteren integriert ist.

6. Vorrichtung nach Anspruch 5, dadurch gekennzeichnet, daß die genannte elastische Druckfeder (33) fest mit einem auf dem Körper (32) des Sensorblocks (30) montierten Reifen (331) verbunden ist, wobei sie an diesen angesetzt und mechanisch mit ihm verbunden ist.

7. Vorrichtung nach Anspruch 1, dadurch gekennzeichnet, daß das Feststellorgan (34) des Sensorblocks durch einen Befestigungsflansch (31) gehalten wird.

8. Vorrichtung nach Anspruch 7, dadurch gekennzeichnet, daß der Befestigungsflansch (31) an den Sensorblock (30) angesetzt und fest mit diesem verbunden ist.

9. Vorrichtung nach Anspruch 7, dadurch gekennzeichnet, daß der Befestigungsflansch des Sensorblocks vom Kopf (311) des genannten Blocks durch eine Biegezone (40) getrennt ist, die eine relative Verschiebung des genannten Kopfs (311) in Bezug auf eine Befestigungs- und Halteklaue (312) ermöglicht, die eine Bohrung (35) für das Befestigungsorgan (34) aufweist.

10. Vorrichtung nach einem der Ansprüche 1, 5, 6, 7, 8, 9, dadurch gekennzeichnet, daß der Sensorblock (30) einen zusätzlichen Anschlag (37) aufweist, der die Bewegung des Sensorblocks (30) in dem Sitz (23) begrenzt, der in seiner Auflage (112) vorgesehen ist.

11. Vorrichtung nach einem der Ansprüche 1, 5, 6, 7, 8, 9, 10, dadurch gekennzeichnet, daß die Ermittlungsfläche (36) des Sensorblocks zum Kodierelement (17) hin gerichtet ist, das durch eine ringförmige Auflage gehalten wird, die außen am Ende des äußeren Rings des Wälzlagers, das dem Befestigungsflansch des genannten Rings entgegengesetzt ist, montiert ist.

## Claims

1. Device for sensing the speed of rotation of a rolling bearing which has a coding element (17) integral with the revolving part (14) of the bearing and a sensor unit (30) formed by a sensor carrier (31) fixed to a support (12, 112) mounted in contact with the non-revolving part (13) of the bearing, characterised by the fact that sensor unit (30) is mounted on an elastic positioning support (33) exerting a force F in the direction of the coding element (17) and in contact with a thrust bearing (18), and that adjustment means (31, 35) carried by the sensor unit (30) provide the positioning of the latter with respect to a removable immobilising means (34) for said sensor unit (30) in contact with the support (12, 112).

2. Device according to claim 1, characterised by the fact that the elastic bearing force (F) exerted on the sensor unit (30) is oriented perpendicularly with respect to a sensing face (36) of said sensor unit (30).

3. Device according to claim 2, characterised by the fact that the thrust bearing (18) is formed by a lateral face of the fixed ring (13) of the bearing.

4. Device according to claim 2, characterised by the fact that the thrust bearing (18) is formed by a radial extension of a deflector (50) in contact with a sealing gasket (16) and connected to the fixed ring (13).

5. Device according to claim 2, characterised by the fact that the sensor unit (30) is substantially cylindrical, and has an elastic press tongue (33) diametrically opposite to the sensing face (36) of the sensor unit and integral therewith.

6. Device according to claim 5, characterised by the fact that said elastic tongue (33) is integral with a collar (331) mounted on the body (32) of the sensor unit (30), then joined to and made mechanically integral therewith.

7. Device according to claim 1, characterised by the fact that the member (34) for immobilising the sensor unit is carried by a fixing flange (31),

8. Device according to claim 7, characterised by the fact that the fixing flange is joined to and integral with the sensor unit (30).

9. Device according to claim 7, characterised by the fact that the fixing flange of the sensor unit is separated from the head (311) of said unit by a flexion zone (40) allowing relative movement of said head (311) with respect to a fixing and supporting foot (312) provided with a bore (35) for the fixing member (34).

10. Device according to any one of claims 1, 5, 6, 7, 8, 9, characterised by the fact that the sensor unit (30) has an additional thrust bearing (37) for limiting the movement of the sensor unit (30) in the housing (23) provided by its support (112).

11. Device according to any one of claims 1, 5, 6, 7, 8, 9, 10, characterised by the fact that the sensing face (36) of the sensor unit is oriented towards the coding element (17) carried on an annular support mounted externally on the extremity of the external bearing ring opposite the fixing flange of said ring.
